# EUROPÄISCHE PATENTSCHRIFT

(11) **EP 0 732 365 B1**
(45) Veröffentlichungstag und Bekanntmachung des Hinweises auf die Patenterteilung: **04.06.2003**
(21) Anmeldenummer: 96103283.6
(22) Anmeldetag: 04.03.1996
(51) Int. Cl.: C08L 69/00, C08K 5/46

(54) **Gegen Gamma-Strahlung stabilisierte (Co)Polycarbonate**
Polycarbonate compositions resistant to gamma radiation
Composition de polycarbonate résistant à la radiation gamma

(30) Priorität: 16.03.1995 DE 19509511
(43) Veröffentlichungstag der Anmeldung: 18.09.1996
(73) Patentinhaber: BAYER AG, 51368 Leverkusen (DE)
(72) Erfinder: Ebert, Wolfgang, Dr., 47800 Krefeld (DE); Hufen, Ralf, 47239 Duisburg (DE); Schubart, Rüdiger, Dr., 51467 Bergisch Gladbach (DE); Fennhof, Gerhard, Dr., 47877 Willich (DE)

(56) Entgegenhaltungen:
- EP-A- 0 376 289
- US-A- 4 148 800
- US-A- 4 996 245
- US-A- 5 055 505

## Beschreibung

Die Erfindung betrifft gegen die verfärbende Wirkung der γ-Strahlung stabilisierte (Co)-Polycarbonate auf Basis von Diphenolen und einem oder mehreren Stabilisatoren.

Gegenstand der Erfindung sind Polycarbonatformmassen enthaltend
a) 97,5 Gew.-% bis 99,9 Gew.-% eines Polycarbonates oder Copolycarbonates und
b) 0,1 Gew.-% bis 2,5 Gew.-% eines γ-Stabilisators entsprechend Formel (I), bezogen jeweils auf 100 Gew.-% aus a) und b)

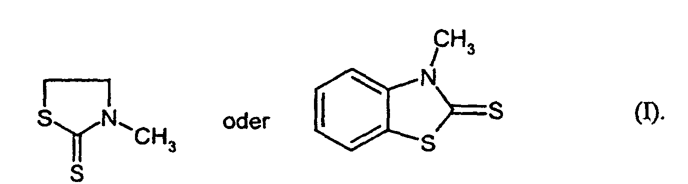

Als weiterer Stabilisator können c) 0,1 Gew.-% bis 3,5 Gew.-%, bevorzugt 0,25 Gew.-% bis 2,0 Gew.-% gegebenenfalls endverkapptes Polypropylenglykol mit einem mittleren Molekulargewicht von 250 bis 10.000, bevorzugt 500 bis 5.000 in den erfindungsgemäßen Polycarbonatformmassen enthalten sein, wobei sich die Gewichtsprozente von c) jeweils auf 100 Gew.-% a) + b) beziehen.

Der Stand der Technik in der Stabilisierung gegen γ-Strahlen besteht in einer Ausrüstung des Polycarbonates mit oligomeren Polypropylenglykolen (EP-376 289), oligomeren bromierten Bisphenol A-Polycarbonaten (EP 114973), Blends aus Polycarbonat und Polyestem auf Basis von Terephthalsäure und Cyclohexandimethanol (EP 152 012) oder organischen Disulfiden, jeweils gegebenenfalls in Kombination mit oligomeren Polypropylenglykolen.

Nachteilig an diesen Stabilisatoren sind z.B. beim Polypropylenglykol alleine die unzureichende Stabilisierung bei höheren Strahlungsdosen, beim bromierten System die mangelhafte Einsetzbarkeit aufgrund des Halogenanteils, bei der Verwendung der Polyesterblends die fehlende Fähigkeit zur Heißdampfsterilisation und beim Disulfidsystem das kleine Verarbeitungsfenster bevor Zersetzung auftritt.

Die Aufgabe bestand daher darin, ein Additivsystem zu entwickeln, das unter Herstellungs- und Verarbeitungsbedingungen stabil ist, zu Heißdampf sterilisierbaren Formkörpern führt, um eine universelle Einsetzbarkeit zu garantieren, keine Halogenhaltigen Stabilisatoren verwendet und eine ausreichende Stabilisierung bei Bestrahlung mit 5 Mrad garantiert.

Die Aufgabe wurde durch den erfindungsgemäßen Zusatz des Stabilisators (I) gelöst.

Für die Herstellung der erfindungsgemäß einzusetzenden Polycarbonate geeignete Diphenole sind solche der allgemeinen Formel (II)

HO-Z-OH (II)

mit vorzugsweise 6 bis 30 C-Atomen sind sowohl einkernige, als auch mehrkernige Diphenole, die Heteroatome enthalten können und unter den Bedingungen der Polycarbonatherstellung und deren thermischer Bestrahlung inerte Substituenten haben können.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -sulfoxide, -sulfone und a,a-Bis-(hydroxyphenyl)-diisopropylbenzole, sowie deren kemalkylierte und kernhalogenierte Verbindungen genannt.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050, sowie in der Monographie "H. Schnell, Chemistry and Physics of Polycarbonates, Interscience Publishers, New York, 1964" beschrieben.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, a,a-Bis-(4-hydroxyphenyl)-p-diisopropylbenzol, α,α-Bis-(4-hydroxyphenyl)-mdiisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, a,a-Bis-(3,5-dimethyl-4-hydroxyphenyl)-p-diisopropylbenzol, 1, 1-Bis-(4-hydroxyphenyl)-3,3,5-trimethylcyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan, 2,2-Bis-(3,5-dichlor-4-hydroxyphenyl)-propan, 2,2-Bis-(3,5-dibrom-4-hydroxyphenyl)-propan, 1,1 -Bis-(4-hydroxyphenyl)- 1 -phenyl-ethan, 2,2-Bis-(3,5-dimethyl-4-hydroxyphenyl)-2-phenyl-ethan, 2,2-Bis-(4-hydroxyphenyl)-2,2-diphenyl-ethan, 9,9-Bis-(4-hydroxyphenyl)-fluoren, 9,9-Bis-(3,5-dimethyl-4-hydroxyphenyl)-fluoren.

Besonders bevorzugte Diphenole sind z.B. 2,2-Bis-(4-hydroxyphenyl)-propan, 2,2-Bis-(3,5-dimethyl-4-hydroxyphenyl)-propan, 1,1-Bis-(4-hydroxyphenyl)-cyclohexan, 1,1-Bis-(4-hydroxyphenyl)-1 -phenyl-ethan, 1,1-Bis-(4-hydroxyphenyl)-3,3,5-trimethylcyclohexan, 1,1-Bis-(4-hydroxyphenyl)-3-methylcyclohexan, 1,1 -Bis-(4-hydroxyphenyl)-4-methylcyclohexan, 9,9-Bis-(3,5-dimethyl-4-hydroxyphenyl)-fluoren.

Insbesondere sind 2,2-Bis-(4-hydroxyphenyl)-propan, 1,1 -Bis-(4-hydroxyphenyl)-3,3,5-trimethylcyclohexan und 1,1 -Bis-(4-hydroxyphenyl)-1-phenylethan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol-% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise bei der Synthese mitverwendet werden. Einige der verwendbaren Verbindungen sind beispielsweise 1 ,3,5-Tris-(4-hydroxyphenyl)-benzol, 1,3,5-Tris-(4-(4-hydroxyphenylisopropyl)-phenyl)-benzol, 1,1,1-Tris-(4-hydroxyphenyl)-ethan, 2,6-Bis-(2-hydroxy-5'-methyl-benzyl)-4-methylbenzol, 2-(4-Hydroxyphenyl)-2-(2,4-dihydroxyphenyl)-propan, Hexakis-(4-(4-hydroxyphenylisopropyl)-phenyl)-ortho-terephthalsäureester, Tetrakis-(4-hydroxyphenyl)-methan, 1,1-Bis-((4',4"-dihydroxytriphenyl)-methyl)-benzol, 3,3-Bis-(4-hydroxyphenyl)-2-oxo-2,3-dihydroindol, 3,3-Bis-(4-hydroxy-3-methyl-phenyl)-2-oxo-2,3-dihydroindol, ferner geeignet sind die diesen Verbindungen entsprechenden Chlorkohlensäureester, sowie die Säuren oder bevorzugt die Säurechloride von mehr als 2-basigen aliphatischen oder aromatischen Carbonsäuren, also beispielsweise 2,4-Dihydroxybenzoesäure bzw. 2,4-Dihydroxybenzoesäuredichlorid, Trimesinsäure bzw. Trimesinsäuretrichlorid, Trimellithsäure bzw. Trimellithsäuretrichlorid, Cyanursäuretrichlorid, wobei diese Verzweiger einzeln oder im Gemisch vorgelegt oder der Synthese portionsweise zugesetzt werden können.

Als Kettenabbrecher können in der Synthese Phenole, gegebenenfalls substituierte Phenole, deren Chlorkohlensäureester, Monocarbonsäuren, sowie deren Säurechloride, bevorzugt Cumylphenol, Phenol, tert.-Butylphenol und i-Octylphenol gegebenenfalls als Mischungen, mit den üblichen Verunreinigungen und Isomeren verwendet werden, wobei die Kettenabbrecher einzeln oder im Gemisch mit den Diphenolen vorgelegt oder der Synthese portionsweise zugesetzt werden können.

Die Herstellung der erfindungsgemäß einzusetzenden Polycarbonate bzw. Polycarbonatgemische kann im wesentlichen nach folgenden drei bekannten Methoden (vgl. H. Schnell, "Chemistry and Physics of Polycarbonates", Polymer Review, Vol. IX, Seite 27 ff., Interscience Publishers, New York, 1964) erfolgen:
1. Nach dem Lösungsverfahren in disperser Phase, sogenanntes "Zweiphasengrenzflächenverfahren".
2..Nach dem Lösungsverfahren in homogener Phase, auch "Pyridinverfahren" genannt.
3. Nach dem Schmetzumesterungsverfahren.

Die erfindungsgemäß einzusetzenden Polycarbonate haben mittlere Gewichtsmittelmolekulargewichte w (ermittelt durch Messung der relativen Viskosität in CH₂Cl₂ bei 25°C und einer Konzentration von 0,5 g in 100 ml CH₂Cl₂) zwischen 10.000 und 80.000, vorzugsweise zwischen 15.000 und 40.000.

Den erfindungsgemäßen Polycarbonatformmassen können vor, während oder nach ihrer Verarbeitung die für thermoplastische Polycarbonate üblichen Additive, wie Stabilisatoren, so z.B. Thermostabilisatoren, wie beispielsweise organische Phosphite, gegebenenfalls in Kombination mit monomeren oder oligomeren Epoxiden, UV-Stabilisatoren, insbesondere solchen auf Basis von Stickstoff-haltigen Heterocyclen, wie Triazolen, optischen Aufhellern, Flammschutzmitteln, insbesondere Fluor-haltigen, wie perfluorierte Salze organischer Säure, Polyperfluorethylen, Salzen organischer Sulfonsäuren und deren Kombinationen, gegebenenfalls anderen Entformungsmitteln, Farbmitteln, Pigmenten, Antistatika, Füllstoffen und Verstärkungsstoffen in den üblichen Mengen zugesetzt werden.

Die Stabilisatoren (I) sind aus der Kautschukchemie literaturbekannt (siehe beispielsweise Ullmann: "Encyclopedia of industrial Chemistry" A 23, S. 370f; 5. Auflage) oder nach literaturbekannten Verfahren erhältlich (siehe DOS 2101215 bzw. US 4 148 800).

Eingesetzt werden die genannten Stabilisatoren einzeln oder in beliebigen Gemischen, in Konzentrationen von 0,1 Gew.-% bis 2,5 Gew.-%, wobei die Zugabe in Substanz, als Pulver oder Schmelze oder aber als Lösung vor oder während der Aufarbeitung des Polycarbonatharzes, aber auch in einem anschließenden Compoundierschritt erfolgen kann. Als Lösungsmittel für (I) kann beispielsweise Dichlormethan und/oder Chlorbenzol dienen.

Dabei kann es vorteilhaft sein, wenn die Formmassen neben den genannten Stabilisatoren, noch Polypropylenglykole in Mengen von 0,1 Gew.-% bis 3,5 Gew.-%, bevorzugt 0,25 Gew.-% bis 2,0 Gew.-% gegebenenfalls endverkapptem Polypropylenglykol mit einem mittleren Molekulargewicht von 250 bis 10.000, bevorzugt 500 bis 5.000 enthalten. Derartige Polypropylenglykole sind literaturbekannt. Zur Beseitigung gelegentlich auftretender leichter Gelbfärbungen ist es unter Umständen sinnvoll die Formmassen darüber hinaus mit den für Polycarbonat üblichen Phosphor-haltigen Stabilisatoren auszurüsten.

Die erfindungsgemäßen Polycarbonate können zu Förmkörpern verarbeitet werden, indem man, beispielsweise, die in bekannter Weise isolierten Polycarbonate zu Granulat extrudiert und dieses Granulat, gegebenenfalls nach Zusatz der obengenannten Additive, durch Spritzguss zu verschiedenen Artikeln in bekannter Weise verarbeitet.

Die erfindungsgemäßen Polycarbonate sind als Formkörper überall dort einsetzbar, wo die bislang für diesen Zweck bekannten Polycarabonate eingesetzt werden, besonders jedoch im medizinischen Anwendungsbereich, also z.B. für Dialysatorgehäuse.

Gegenstand der vorliegenden Erfindung ist somit auch die Verwendung der erfindungsgemäßen Polycarbonatformmassen zur Herstellung von Gegenständen für medizinische Anwendungen.

Den erfindungsgemäßen Polycarbonaten können, für meist nicht transparente Anwendungen, noch andere Thermoplaste in üblichen Mengen, d.h. zwischen 10 Gew.-% und 50 Gew.-%, bezogen auf das erfindungsgemäße Polycarbonat, zugemischt werden.

Geeignete andere Thermoplaste sind beispielsweise aromatische Polyestercarbonate, Polycarbonate auf Basis anderer Bisphenole als die erfindungsgemäßen Polycarbonate, Polyalkylenterephthalate, EPDM-Polymerisate, Polystyrol und Co- und Pfropfcopolymerisate auf Basis Styrol wie insbesondere ABS.

### Beispiele

Zur Herstellung der Probekörper wurde ein additivfreies, unstabilisiertes Polycarbonat mit einem mittleren Molekulargewicht von ca. 30.000 (Mw nach GPC), Lösungsviskosität: η = 1,293 bei 300°C auf einem Zweiwellenextruder mit der angegebenen Menge Stabilisator compoundiert und anschließend granuliert. Aus diesem Granulat werden anschließend Farbmusterplättchen abgespritzt (Dicke 4mm). Der Yellowness-Index dieser Plättchen wird von der Bestrahlung bestimmt (Hunter-Lab-Gerät), anschließend werden diese Probekörper bestrahlt (Dosis: 5 Mrad; Co-Bombe), 10 Tage im Dunkeln gelagert und wieder der YI bestimmt. Aus der Differenz der beiden Messungen, vor und nach der Bestrahlung, wird der zur Beurteilung verwendete YI_{Diff} ermittelt.

### a) Vergleichsversuche:

| Verbindung | Konz. (Gew.-%) | YI_{Anfang} | YI_{bestrah} | YI_{Diff} |
|---|---|---|---|---|
| Polycarbonat_{reextr.} | - | 6,31 | 48,88 | 42,57 |
| | - | 6,27 | 48,07 | 41,80 |
| Polypropylenglykol | 0,75 | 4,58 | 29,24 | 24,66 |
| | 0,75 | 4,70 | 30,07 | 25,37 |
| Distearyldisulfid | 0,50 | 10,47 | 25,93 | 15,46 |
| | 0,50 | 10,16 | 25,70 | 15,54 |

### b) Erfindungsgemäß

| Verbindung | Konz. (Gew.-%) | YI_{Anfang} | YI_{bestrah} | YI_{Diff} |
|---|---|---|---|---|
| Beispiel 1: Verb. A Verb. A | | | | |
| | 0,5 | 7,5 | 20,9 | 12,5 |
| | 0,5 | 7,6 | 19,5 | 11,9 |
| Beispiel 2: Verb. A Verb. A | | | | |
| | 0,75 | 7,7 | 19,4 | 11,7 |
| | 0,75 | 7,7 | 18,8 | 11,1 |
| Beispiel 3: Verb. A Verb. A | | | | |
| | 0,25 | 6,6 | 20,9 | 14,4 |
| | 0,25 | 6,5 | 19,9 | 13,4 |
| Beispiel 4: Verb. B Verb. B | | | | |
| | 0,5 | 6,0 | 26,0 | 20,0 |
| | 0,5 | 6,1 | 26,5 | 20,4 |
| Beispiel 5: Verb. B Verb. B | | | | |
| | 0,2 | 4,6 | 26,2 | 21,6 |
| | 0,2 | 4,9 | 26,7 | 21,8 |

Alle Beispiele 1 bis 5 enthielten zusätzlich 0,75 Gew.-% Polypropylenglykol, MG ca. 2000. Zur Sicherheit der Bestimmung wurden pro Versuch zwei Farbplättchen vermessen.
Verbindung A: 3-Methyl-thiazolidin-thion-2
Verbindung B: 3 -Methyl-5,6-benzo-thiazolidin-thion-2

## Patentansprüche

1. Polycarbonatformmassen enthaltend
a) 97,5 Gew.-% bis 99,9 Gew.-% eines Polycarbonates oder Copolycarbonates und
b) 0,1 Gew.-% bis 2,5 Gew.-% eines γ-Stabilisators entsprechend Formel (I), bezogen jeweils auf 100 Gew.-% aus a) und b)

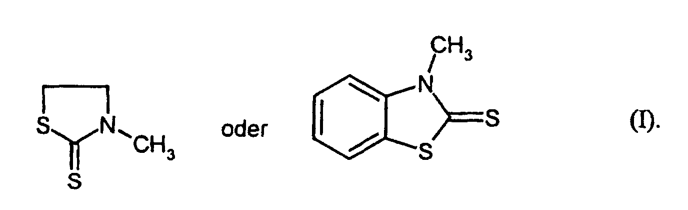

2. Formmassen gemäß Anspruch 1, **dadurch gekennzeichnet, dass** sie zusätzlich c) 0,1 Gew.-% bis 3,5 Gew.-%, gegebenenfalls endgruppenverkappte Polypropylenglykole enthalten, mit einem mittleren Molekulargewicht von 250 bis 10.000, wobei sich die Gewichtsprozente von c) jeweils auf 100 Gew.-% a) + b) beziehen.

3. Formmassen gemäß Anspruch 1, **dadurch gekennzeichnet, dass** (I) 3-Methylthazolidin-thion-2 ist.

4. Formmassen gemäß Anspruch 1 bis 3, **dadurch gekennzeichnet, dass** die Polycarbonate auf Basis von 2,2-Bis-(4-hydroxyphenyl)-propan, 1,1-Bis-(4-hydroxyphenyl)-3,3,5-trimethylcyclohexan und 1,1-Bis-4-(hydroxyphenyl)-1-phenylethan oder deren Mischungen synthetisiert wurden.

5. Verwendung der Polycarbonatformmassen gemäß den Ansprüchen 1 bis 4 zur Herstellung von Gegenständen für medizinische Anwendungen.

## Claims

1. Polycarbonate moulding compositions containing
a) 97.5 wt.% to 99.9 wt.% of a polycarbonate or copolycarbonate and
b) 0.1 wt.% to 2.5 wt.% of a y-stabiliser corresponding to formula (I), each with respect to 100 wt.% of a) and b),

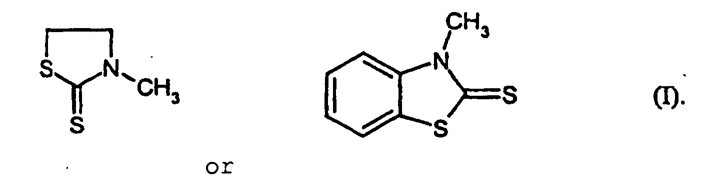

2. Moulding compositions according to Claim 1, **characterised in that** they also contain c) 0.1 wt.% to 3.5 wt.% of optionally terminally capped polypropylene glycols with an average molecular weight of 250 to 10,000, wherein each percentage by weight of c) is given with respect to 100 wt.% of a) + b).

3. Moulding compositions according to Claim 1, **characterised in that** (I) is 3-methyl-thiazolidinthione-2.

4. Moulding compositions according to Claims 1 to 3, **characterised in that** the polycarbonates were synthesised from 2,2-bis-(4-hydroxyphenyl)-propane, 1,1-bis-(4-hydroxyphenyl)-3,3,5-trimethylcyclohexane and 1,1-bis-(4-hydroxyphenyl)-1-phenylethane or mixtures thereof.

5. Use of polycarbonate moulding compositions according to Claims 1 to 4 to produce items for medical applications.

## Revendications

1. Matières à mouler en polycarbonate contenant
a) 97,5 % en poids à 99,9 % en poids d'un polycarbonate ou copolycarbonate et
b) 0,1% en poids à 2,5 % en poids d'un stabilisant contre les rayonnements γ, répondant à la formule (I) 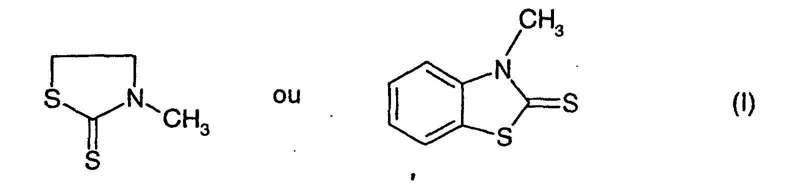
la somme de a) et b) représentant 100 % en poids

2. Matières à mouler selon revendication 1, **caractérisées en ce qu'**elles contiennent en outre c) 0,1 % en poids à 3,5 % en poids de polypropylèneglycols à groupes terminaux éventuellement bloqués, à un poids moléculaire moyen de 250 à 10 000, le pourcentage en poids de c) se rapportant à 100 % en poids de a) + b).

3. Matières à mouler selon revendication 1, **caractérisées en ce que** le composé de formule (I) est la 3-méthyl-thiazolidine-thione-2.

4. Matières à mouler selon les revendications 1 à 3, **caractérisées en ce que** les polycarbonates ont été préparés à base du 2,2-bis-(4-hydroxyphényl)propane, du 1,1-bis-(4-hydroxyphényl)-3,3,5-triméthylcyclohexane ou du 1,1-bis-4-(hydroxyphényl)-1-phényléthane ou de leurs mélanges.

5. Utilisation des matières à mouler en polycarbonate selon les revendications 1 à 4 pour la fabrication d'objets destinés à des applications médicales.
